# EUROPEAN PATENT APPLICATION

(11) **EP 3 522 421 A1**
(43) Date of publication of application: **07.08.2019**
(21) Application number: 17854926.7
(22) Date of filing: 28.09.2017
(51) Int. Cl.: H04L 1/18

(54) **METHOD, DEVICE AND SYSTEM FOR DATA TRANSMISSION**

(30) Priority: 28.09.2016 CN 201610860616
(71) Applicant: ZTE Corporation, Shenzhen, Guangdong 518057 (CN)
(72) Inventor: WU, Yumin, Shenzhen Guangdong 518057 (CN); ZHAO, Yajun, Shenzhen Guangdong 518057 (CN)
(74) Representative: Studio Torta S.p.A.
(86) International application number: PCT/CN2017/103912
(87) International publication number: WO 2018/059476

(57) **Abstract**

Disclosed are a method, device and system for data transmission. The method may comprise: a network side receiving capability information reported by a UE; the network side sending, based on the capability information about the UE and at least one of the pre-acquired current service types of the UE, configuration indication information to the UE; and the network side sending, according to the configuration indication information, data to the UE, or receiving, according to the configuration indication information, data sent by the UE.

## Description

### TECHNICAL FIELD

The present disclosure relates to the field of wireless communication technologies, and more particularly, to a data transmission method, device and system.

### BACKGROUND

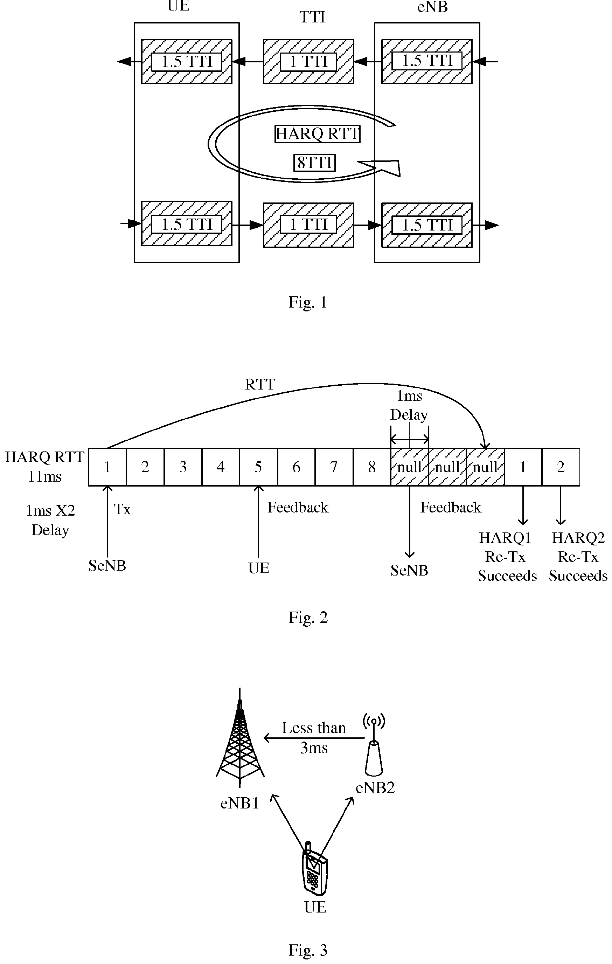

A complete Hybrid Automatic Repeat Request (HARQ) process has a total of 8 Transmission Time Intervals (TTI) for Round Trip Time (RTT) required by the process from transmission to feedback. As shown in FIG. 1, it includes time (1.5 TTI) of data processed by an eNB (effective noise bandwidth), transmission data delay (1TTI) of the eNB, time (1.5 TTI) of data processed by a UE, feedback time (1.5TTI) processed by the UE, transmission feedback time (1TTI) of UE, and feedback time (1.5TTI) processed by the eNB, respectively. In order to avoid conflict between new data transmission and retransmission data, number of HARQ (Hybrid Automatic Repeat reQuest) processes can be limited to number of HARQ RTTs.

Currently, the time relationship of transmission and feedback through the HARQ process is fixed. For the cross-base station carrier aggregation HARQ process, it should be noted that a User Equipment (UE) receives downlink data on a secondary base station SeNB, and feeds back uplink data on a primary base station MeNB. Since the number of HARQ RTTs between the two base stations is 11 TTI, and the number of HARQ processes actually available to the UE is 8, in order to avoid conflicts between new transmission and retransmission of the UE, as shown by null (invalid) in FIG. 2, the network side stops scheduling three TTIs, resulting in a decrease in the data transmission rate of the UE.

For the Coordinated Multiple Points (CoMP) as shown in FIG. 3, it should be noted that the eNB2 needs to transmit the received data to the eNB1, and the eNB1 combines and decodes data received from the UE and from the eNB2 to improve the decoding success rate. Since the UE needs to receive feedback from the network side at the subframe position of n+4 (wherein n is the subframe in which the UE transmits data), the delay between the eNBs needs to be less than 3 ms.

Through the above scenario description, it is not difficult to find that the time relationship between the current HARQ process for transmission and feedback is fixed, which leads to a scenario that restricts network deployment. For different services, due to different delay requirements, the data transmission and reception delay of the UE may increase.

### SUMMARY

In order to solve the above technical problem, embodiments of the present disclosure are expected to provide a method, device, and system for data transmission, capable of adapting to more flexible network deployment and reducing service transmission delay of the UE.

The technical scheme of the present disclosure is implemented as follows.

In a first aspect, an embodiment of the present disclosure provides a data transmission method, the method includes:
receiving, by a network side, capability information reported by a user equipment UE;
sending, by the network side based on at least one of the capability information of the UE and pre-acquired service type of the UE , configuration indication information to the UE; wherein the configuration indication information is indicative of a time point for data transmission between the network side and the UE; and
sending, by the network side, data to the UE based on the configuration indication information, or receiving data sent by the UE based on the configuration indication information.

In an embodiment, the capability information reported by the UE includes at least one of: feedback delay of the UE receiving data, data processing delay of the UE, and an indication of the UE supporting at least one of configurable HARQ feedback and retransmission.

In an embodiment, the configuration indication information is carried in at least one of: a radio resource control RRC message, a media access control MAC control message, and a physical layer indication message.

In an embodiment, the configuration indication information includes at least one of: identification information associated with a HARQ process, number of available HARQ processes for uplink data transmission, number of available HARQ processes for downlink data transmission, HARQ feedback time of uplink data transmission, HARQ feedback time of downlink data transmission, HARQ retransmission time of uplink data transmission, and HARQ retransmission time of downlink data transmission.

Wherein, the identification information associated with a HARQ process includes at least one of: a radio bearer identification, a MAC entity identification, a serving cell identification and a HARQ process identification.

In an embodiment, when the configuration indication information is carried in a RRC connection reconfiguration message in a RRC message, the configuration indication information includes at least one of: the number of available HARQ processes for uplink data transmission, the number of available HARQ processes for downlink data transmission, the HARQ feedback time of uplink data transmission, the HARQ feedback time of downlink data transmission, the HARQ retransmission time of uplink data transmission, and the HARQ retransmission time of downlink data transmission.

In an embodiment, when the network side schedules downlink data transmission through PDCCH, the configuration indication information includes at least one of: the HARQ feedback time of downlink data transmission, and the HARQ retransmission time of downlink data transmission.

In an embodiment, when the network side schedules uplink data transmission through PDCCH, the configuration indication information includes at least one of: the HARQ feedback time of uplink data transmission, and the HARQ retransmission time of uplink data transmission.

In an embodiment, the sending, by the network side, data to the UE based on the configuration indication information, or receiving data sent by the UE based on the configuration indication information includes: receiving, by the network side, first feedback data sent by the UE in the HARQ feedback time of downlink data transmission indicated in the configuration indication information; or, sending, by the network side, first retransmission data to the UE in the HARQ retransmission time of downlink data transmission indicated in the configuration indication information.

In an embodiment, the sending, by the network side, data to the UE based on the configuration indication information, or receiving data sent by the UE based on the configuration indication information includes: sending, by the network side, second feedback data to the UE in the HARQ feedback time of uplink data transmission indicated in the configuration indication information; or, receiving, by the network side, second retransmission data sent by the UE in the HARQ retransmission time of uplink data transmission indicated in the configuration indication information.

In a second aspect, an embodiment of the present disclosure provides a data transmission method, the method includes:
sending, by a user equipment UE, capability information of the UE to a network side;
receiving, by the UE, configuration indication information sent by the network side; wherein, the configuration indication information is indicative of a time point for data transmission between the network side and the UE; and
receiving, by the UE, data sent by the network side based on the configuration indication information; or sending data to the network side based on the configuration indication information.

In an embodiment, the capability information sent by the UE includes at least one of: feedback delay of the UE receiving data, data processing delay of the UE, and an indication of the UE supporting at least one of configurable HARQ feedback and retransmission.

In an embodiment, the configuration indication information includes at least one of: identification information associated with a HARQ process, number of available HARQ processes for uplink data transmission, number of available HARQ processes for downlink data transmission, HARQ feedback time of uplink data transmission, HARQ feedback time of downlink data transmission, HARQ retransmission time of uplink data transmission, and HARQ retransmission time of downlink data transmission.

Wherein, the identification information associated with a HARQ process includes at least one of: a radio bearer identification, a MAC entity identification, a serving cell identification and a HARQ process identification.

In an embodiment, the configuration indication information is carried in at least one of: a radio resource control RRC message, a media access control MAC control message, and a physical layer indication message.

In an embodiment, the receiving, by the UE, the capability information sent by the network side, or sending data to the network side based on the configuration indication information includes, for exemple: for received downlink data, sending, by the UE, first feedback data to the network side in HARQ feedback time of downlink data transmission indicated in the configuration indication information; or, receiving, by the UE, first retransmission data sent by the network side in HARQ retransmission time of downlink data transmission indicated in the configuration indication information.

In an embodiment, the receiving, by the UE, the capability information sent by the network side, or sending data to the network side based on the configuration indication information includes, for example: receiving, by the UE, second feedback data sent by the network side in HARQ feedback time of uplink data transmission indicated in the configuration indication information; or, sending, by the UE, second retransmission data to the network side in HARQ retransmission time of uplink data transmission indicated in the configuration indication information.

In a third aspect, an embodiment of the present disclosure provides a data transmission device, the device includes a first receiving module, a first sending module and a first data transmission module, wherein,
the first receiving module is configured to receive capability information reported by a user equipment UE;
the first sending module is configured to send, based on at least one of the capability information of the UE and pre-acquired service type of the UE, configuration indication information to the UE; wherein the configuration indication information is indicative of a time point for data transmission between the network side and the UE;
the first data transmission module is configured to send data to the UE based on the configuration indication information, or receive data sent by the UE based on the configuration indication information.

In an embodiment, the capability information reported by a UE includes at least one of: feedback delay of the UE receiving data, data processing delay of the UE, and an indication of the UE supporting at least one of configurable HARQ feedback and retransmission.

In a fourth aspect, an embodiment of the present disclosure provides a data transmission device, the device includes a second sending module, a second receiving module and a second data transmission module, wherein,
the second sending module is configured to send capability information of the device to a network side;
the second receiving module is configured to receive configuration indication information sent by the network side; wherein, the configuration indication information is indicative of a time point for data transmission between the network side and the second data transmission module;
the second data transmission module is configured to receive data sent by the network side based on the configuration indication information; or send data to the network side based on the configuration indication information.

In an embodiment, the capability information sent by the second sending module includes: feedback delay of the UE receiving data, data processing delay of the UE, and an indication of the UE supporting at least one of configurable HARQ feedback and retransmission.

In a fifth aspect, an embodiment of the present disclosure provides a network side device, the network side device includes a communication interface, a memory, a processor and a bus; wherein,
the bus is configured to connect the communication interface, the processor, and the memory;
the communication interface is configured to perform data transmission with an external network element;
the memory is configured to store instructions and data;
the processor executing the instructions is configured to: indicate the communication interface to receive capability information reported by a user equipment UE;
indicate, based on at least one of the capability information of the UE and pre-acquired service type of the UE, the communication interface to send configuration indication information to the UE; wherein the configuration indication information is indicative of a time point for data transmission between the network side and the UE; and
indicate, based on the configuration indication information, the communication interface to send data to the UE, or indicate, based on the configuration indication information, the communication interface to receive data sent by the UE.

In a sixth aspect, an embodiment of the present disclosure provides a user equipment UE, the UE includes a communication interface, a memory, a processor and a bus; wherein,

the bus is configured to connect the communication interface, the processor, and the memory;
the communication interface is configured to perform data transmission with an external network element;
the memory is configured to store instructions and data;
the processor executing the instructions is configured to: indicate the communication interface to send capability information of the UE to a network side;
indicate the communication interface to receive configuration indication information sent by the network side; wherein the configuration indication information is indicative of a time point for data transmission between the network side and a UE; and

indicate the communication interface to receive data sent by the network side based on the configuration indication information; or indicate the communication interface to send data to the network side based on the configuration indication information.

In a seventh aspect, an embodiment of the present disclosure provides a data transmission system, the system includes a network side device and a user equipment UE; wherein,
the network side device is configured to: receive capability information reported by the user equipment UE;
send, based on at least one of the capability information of the UE and pre-acquired service type of the UE, the configuration indication information to the UE; wherein the configuration indication information is indicative of a time point for data transmission between the network side and the UE; and
send, based on the configuration indication information, data to the UE, or receive, based on the configuration indication information, data sent by the UE;
the UE is configured to: send capability information of the UE to the network side;
receive configuration indication information sent by the network side; wherein, the configuration indication information is indicative of a time point for data transmission between the network side and the UE; and
receive, based on the configuration indication information, the data sent by the network side; or send, based on the configuration indication information, the data to the network side.

In an eighth aspect, an embodiment of the present disclosure provides a storage medium, configured to store program codes for performing any of the above methods.

The embodiments of the present disclosure provide a method, a device, and a system for data transmission. The time point of data transmission, feedback or retransmission of HARQ are flexibly configured according to different UE processing capabilities, network processing capabilities, network deployment, or service type of the UE, to adapt to more flexible network deployment and reduce the service transmission delay of the UE.

### BRIEF DESCRIPTION OF THE DRAWINGS

FIG. 1 is a schematic diagram illustrating round trip time of a HARQ according to an embodiment of the present disclosure;
FIG. 2 is a schematic diagram illustrating a cross-base station carrier aggregation HARQ process according to an embodiment of the present disclosure;
FIG. 3 is a schematic diagram illustrating a cross-base station COMP architecture according to an embodiment of the present disclosure;
FIG. 4 is a schematic flowchart illustrating a method for data transmission according to an embodiment of the present disclosure;
FIG. 5 is a schematic flowchart illustrating another method for data transmission according to an embodiment of the present disclosure;
FIG. 6 is a schematic flowchart diagram illustrating an exemplary embodiment according to an embodiment of the present disclosure;
FIG. 7 is a schematic diagram illustrating data transmission of a HARQ process according to an embodiment of the present disclosure;
FIG. 8 is a block diagram illustrating a device for data transmission according to an embodiment of the present disclosure;
FIG. 9 is a block diagram illustrating another device for data transmission according to an embodiment of the present disclosure;
FIG. 10 is a block diagram illustrating a network side device according to an embodiment of the present disclosure;
FIG. 11 is a block diagram illustrating a user equipment according to an embodiment of the present disclosure;
FIG. 12 is a block diagram illustrating a system for data transmission according to an embodiment of the present disclosure.

### DETAILED DESCRIPTION

The technical solutions in the embodiments of the present disclosure will be clearly and completely described in the following with reference to the accompanying drawings in the embodiments of the present disclosure.

### Embodiment 1

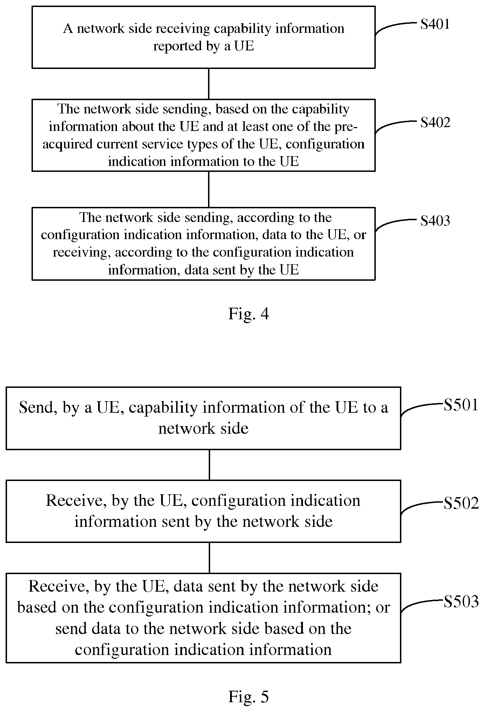

Referring to FIG. 4, a method for data transmission provided by an embodiment of the present disclosure is shown. The method is applied to a network side, and the method may include steps S401-S403.

In step S401, a network side receives capability information reported by a user equipment UE.

Exemplarily, the capability information reported by the UE includes at least one of: feedback delay of the UE receiving data, data processing delay of the UE, and an indication of at least one of configurable HARQ feedback and retransmission supported by the UE.

It should be noted that the indication of at least one of configurable HARQ feedback and retransmission supported by the UE is used to indicate whether the UE has the capability of supporting at least one of configurable HARQ feedback and retransmission; for example, when the UE supports at least one of configurable HARQ feedback and retransmission, the indication may be set to 1; when the UE does not support at least one of configurable HARQ feedback and retransmission; the indication may be set to 0.

In step S402, the network side sends, based on at least one of the capability information of the UE and service type of the UE acquired beforehand, configuration indication information to the UE.

Exemplarily, wherein the configuration indication information is indicative of a time point for data transmission between the network side and the UE; and exemplary carried in at least one of: radio resource control RRC message; media access control MAC control message; and physical layer indication message.

Exemplarily, the configuration indication information can be carried in the RRC connection reconfiguration message in the RRC message, the configuration indication information may also be carried when the downlink data transmission or the uplink data transmission is scheduled by the network side through the physical downlink control channel.

Exemplarily, the configuration indication information includes at least one of: identification information associated with HARQ process, number of available HARQ processes for uplink data transmission, number of available HARQ processes for downlink data transmission, HARQ feedback time of uplink data transmission, HARQ feedback time of downlink data transmission, HARQ retransmission time of uplink data transmission, and HARQ retransmission time of downlink data transmission.

It should be noted that, when the configuration indication information includes the identification information associated with the HARQ process, the configuration indication information is indicative of the configuration of the associated HARQ process; exemplary, the identification information associated with the HARQ process may include at least one of: a radio bearer identification, a MAC entity identification, a serving cell identification and a HARQ process identification. In an embodiment, the HARQ process identification may include: an uplink HARQ process ID, a downlink HARQ process ID, and all HARQ process identifications corresponding to a cell identification or all HARQ process identifications corresponding to the MAC entity identification.

It can be understood that, when the configuration indication information does not include the identification information associated with the HARQ process, the configuration indication information can be considered to be applied to all HARQ processes.

In an embodiment, when the configuration indication information is carried in RRC connection reconfiguration message in the RRC message, the configuration indication information may include at least one of: the number of available HARQ processes for uplink data transmission, the number of available HARQ processes for downlink data transmission, the HARQ feedback time of uplink data transmission, the HARQ feedback time of downlink data transmission, the HARQ retransmission time of uplink data transmission, and the HARQ retransmission time of downlink data transmission.

In an embodiment, the network side schedules downlink data transmission through PDCCH, the configuration indication information may include at least one of: the HARQ feedback time of downlink data transmission, and the HARQ retransmission time of downlink data transmission.

In an embodiment, the network side schedules uplink data transmission through PDCCH, the configuration indication information may include at least one of: the HARQ feedback time of uplink data transmission, and the HARQ retransmission time of uplink data transmission.

In step S403, the network side sends data to the UE based on the configuration indication information, or receives data sent by the UE based on the configuration indication information.

In an embodiment of step S403, for the downlink data, the network side may receive a first feedback data sent by the UE in the HARQ feedback time of the downlink data transmission indicated in the configuration indication information.

In another embodiment, the network side may send a first retransmission data to the UE in the HARQ retransmission time of the downlink data transmission indicated in the configuration indication information.

In an embodiment, for the uplink data, the network side may send a second feedback data to the UE in the HARQ feedback time of the uplink data transmission indicated in the configuration indication information.

In another embodiment, the network side may receive a second retransmission data sent by the UE in the HARQ retransmission time of the uplink data transmission indicated in the configuration indication information.

The embodiment provides a method for data transmission applied to the network side. The network side can flexibly configure the time point of data transmission, feedback and retransmission of HARQ are flexibly configured according to UE processing capabilities or service type, to adapt to more flexible network deployment and reduce the service transmission delay of the UE.

### Embodiment 2

Based on the same technical concept of the foregoing embodiment, referring to FIG. 5, a method for data transmission provided by an embodiment of the present disclosure is shown. The method is applied to a UE side, and the method may include steps S501-S503.

In step S501, a UE sends its own capability information to a network side.

In step S502, the UE receives configuration indication information sent by the network side.

In step S503, the UE receives data sent by the network side based on the configuration indication information; or sends data to the network side based on the configuration indication information.

Exemplarily, the capability information sent by the UE includes at least one of: feedback delay of the UE receiving data, data processing delay of the UE, and an indication of at least one of configurable HARQ feedback and retransmission supported by the UE.

It should be noted that the indication of at least one of configurable HARQ feedback and retransmission supported by the UE is used to indicate whether the UE has the capability of supporting at least one of configurable HARQ feedback and retransmission; for example, when the UE supports at least one of configurable HARQ feedback and retransmission, the indication may be set to 1; when the UE does not support at least one of configurable HARQ feedback and retransmission; the indication may be set to 0.

Exemplarily, the configuration indication information is indicative of a time point for data transmission between the network side and the UE; and exemplary carried in at least one of: radio resource control RRC message, MAC control message, and physical layer indication message.

Exemplarily, the configuration indication information can be carried in the RRC connection reconfiguration message in the RRC message, the configuration indication information may also be carried when the downlink or uplink data transmission is scheduled by the network side through the physical downlink control channel.

Exemplarily, the configuration indication information includes at least one of: identification information associated with HARQ process, number of available HARQ processes for uplink data transmission, number of available HARQ processes for downlink data transmission, HARQ feedback time of uplink data transmission, HARQ feedback time of downlink data transmission, HARQ retransmission time of uplink data transmission, and HARQ retransmission time of downlink data transmission.

It should be noted that, when the configuration indication information includes the identification information associated with the HARQ process, the configuration indication information is indicative of the configuration of the associated HARQ process; exemplary, the identification information associated with the HARQ process may include at least one of: a radio bearer identification, a MAC entity identification, a serving cell identification and a HARQ process identification. In an embodiment, the HARQ process identification may include: an uplink HARQ process ID, a downlink HARQ process ID, and all HARQ process identifications corresponding to a cell identification or all HARQ process identifications corresponding to the MAC entity identification.

It can be understood that, when the configuration indication information does not include the identification information associated with the HARQ process, the configuration indication information can be considered to be applied to all HARQ processes.

In an embodiment, when the configuration indication information is carried in RRC connection reconfiguration message in the RRC message, the RRC connection reconfiguration message may include at least one of: the number of available HARQ processes for uplink data transmission, the number of available HARQ processes for downlink data transmission, the HARQ feedback time of uplink data transmission, the HARQ feedback time of downlink data transmission, the HARQ retransmission time of uplink data transmission, and the HARQ retransmission time of downlink data transmission.

In an embodiment, when the configuration indication information is carried in PDCCH, at least one of the following information is included: the HARQ feedback time of downlink data transmission, and the HARQ retransmission time of downlink data transmission.

In an embodiment, when the configuration indication information is carried in PDCCH, the configuration indication information may include at least one of: the HARQ feedback time of uplink data transmission, and the HARQ retransmission time of uplink data transmission.

In an embodiment of step S503, for the downlink data as received, the UE sends a first feedback data to the network side in the HARQ feedback time of the downlink data transmission indicated in the configuration indication information.

In another embodiment, the UE may receive a first retransmission data sent by the network side in the HARQ retransmission time of the downlink data transmission indicated in the configuration indication information.

In an embodiment, for the uplink data, the UE may receive a second feedback data sent by the network side in the HARQ feedback time of the uplink data transmission indicated in the configuration indication information.

In another embodiment, the UE may send a second retransmission data to the network side in the HARQ retransmission time of the uplink data transmission indicated in the configuration indication information.

The embodiment provides a method for data transmission applied to the UE side. The UE side performs HARQ data transmission, feedback or retransmission according to the time point configured by the network side, which can adapt to more flexible network deployment and reduce the service transmission delay of the UE.

### Embodiment 3

Based on the same technical concept of the foregoing embodiment, the present embodiment describes the technical solution of the above embodiment by the following exemplary embodiments.

### Exemplarily embodiment 1

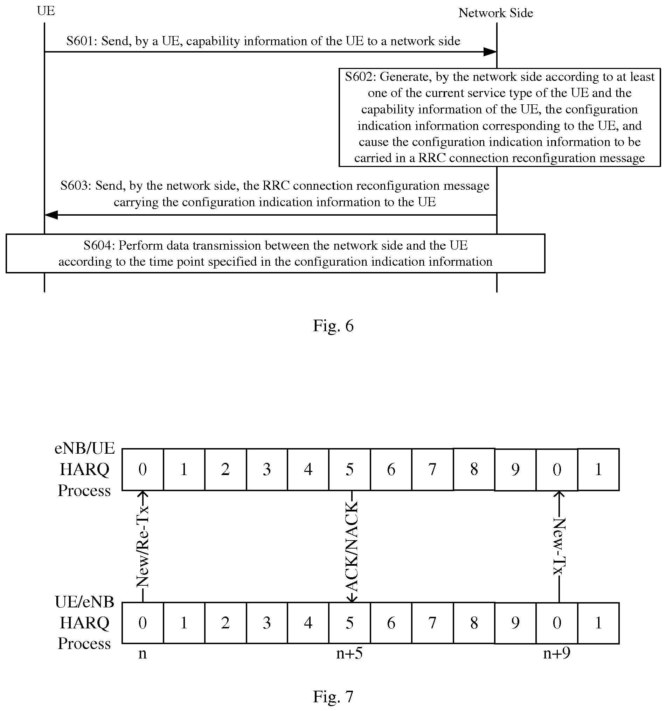

Referring to FIG. 6, a flow of an exemplary embodiment according to an embodiment of the present disclosure is shown, including steps S601-S604.

In step S601, a UE sends its own capability information to a network side.

It should be noted that the capability information includes at least one of: feedback delay of the UE receiving data, data processing delay of the UE, and an indication of at least one of configurable HARQ feedback and retransmission supported by the UE.

In step S602, the network side generates, according to at least one of the current service type of the UE and the capability information of the UE, the configuration indication information corresponding to the UE, and the configuration indication information is carried in RRC connection reconfiguration message.

Exemplarily, the configuration indication information includes at least one of: number of available HARQ processes for uplink data transmission, number of available HARQ processes for downlink data transmission, HARQ feedback time of uplink data transmission, HARQ feedback time of downlink data transmission, HARQ retransmission time of uplink data transmission, and HARQ retransmission time of downlink data transmission.

Exemplarily, as shown in FIG. 6, the number of available HARQ processes for uplink/downlink data transmission is 10, numbered from 0 to 9. The HARQ feedback time of uplink/downlink data transmission is n+5 subframes as shown in FIG. 6, and the HARQ retransmission time of uplink/downlink data transmission is n+9 subframes as shown in FIG. 6, wherein n is the time point at which the data is received.

It should be noted that the configuration indication information may further include identification information associated with the HARQ process. When the configuration indication information includes the identification information associated with the HARQ process, the configuration indication information is indicative of configuration of the associated HARQ process; when the configuration indication information does not include the identification information associated with the HARQ process, the configuration indication information can be considered to be applied to all HARQ processes.

Exemplarily, the identification information associated with the HARQ process may include at least one of: a radio bearer identification, a MAC entity identification, a serving cell identification and a HARQ process identification. In an embodiment, the HARQ process identification may include: an uplink HARQ process ID, a downlink HARQ process ID, and all HARQ process identifications corresponding to a cell identification or all HARQ process identifications corresponding to the MAC entity identification.

In step S603, the network side sends the RRC connection reconfiguration message carrying the configuration indication information to the UE.

In step S604, the network side and the UE perform data transmission according to the time point specified in the configuration indication information.

It can be understood that, after receiving the configuration indication information, the UE parses to obtain the time point in the configuration indication information, and then performs data transmission with the network side according to the time point specified by the configuration indication information.

Exemplarily, for the downlink data, as shown in FIG. 7, the network side may specify the HARQ process number when sending the downlink data, the UE receives the data in the subframe n, and sends the feedback information of the received data in the subframe n+5; if the feedback is NACK, the UE receives, at n+9, retransmission data of the HARQ process on the network side. It should be noted that the total number of available downlink HARQ processes is 10.

For the uplink data, as shown in FIG. 7, the UE sends data in the subframe n, and receives feedback information of the network side for the sending data in the subframe n+5. If the feedback is NACK, the UE sends the retransmission data to the network side in n+9 in the HARQ process.

### Exemplarily embodiment 2

Compared with the first exemplary embodiment, for the steps S602 and S603, in the present exemplary embodiment, when the downlink data transmission is scheduled through the PDCCH on the network side, it corresponds to sending configuration indication information to the UE. Thus, by this time, the configuration indication information includes at least one of: HARQ feedback time of downlink data transmission and HARQ retransmission time of downlink data transmission.

Since the PDCCH is only used to transmit downlink control data, still taking FIG. 7 as an example, the UE receives data in the subframe n, and sends feedback information of the received data in the subframe n+5. If the feedback is NACK, the UE receives, at n+ 9, retransmission data of the HARQ process.

It should be noted that the number of downlink HARQ processes available to the UE can still be carried in the RRC configuration message and sent by the network side.

### Exemplarily embodiment 3

Compared with the first exemplary embodiment, for the steps S602 and S603, in the present exemplary embodiment, when the uplink data transmission is scheduled through the PDCCH on the network side, it corresponds to sending configuration indication information to the UE. Thus, by this time, the configuration indication information includes at least one of: HARQ feedback time of uplink data transmission and HARQ retransmission time of uplink data transmission.

Since the PDCCH is only used to transmit uplink control data, still taking FIG. 7 as an example, the UE sends data in the subframe n, the network sends feedback information of the sending data in the subframe n+5, the UE receives the feedback information of the sending data, If the feedback is NACK, the UE sends, at n+ 9, retransmission data of the HARQ process.

It should be noted that the number of uplink HARQ processes available to the UE can still be carried in the RRC configuration message and sent by the network side.

Through the foregoing three exemplary embodiments, it can be known that, because the network side indicates the time point for the UE to perform HARQ data transmission or feedback or retransmission, thus it can adapt to more flexible network deployment and reduce services transmission delay of the UE.

### Embodiment 4

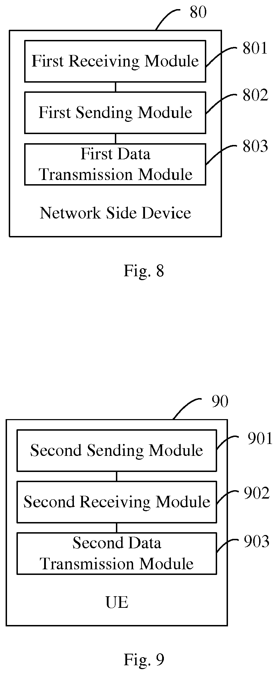

Based on the same technical concept of the foregoing embodiment, referring to FIG. 8, a device 80 for data transmission provided by an embodiment of the present disclosure is shown, the data transmission device 80 can be used in network side device, the data transmission device 80 can include a first receiving module 801, a first sending module 802 and a first data transmission module 803, wherein,
The first receiving module 801 is configured to receive capability information reported by a user equipment UE;
The first sending module 802 is configured to send, based on at least one of the capability information of the UE and service type of the UE acquired beforehand, configuration indication information to the UE; wherein the configuration indication information is indicative of a time point for data transmission between the network side and the UE;
The first data transmission module 803 is configured to send data to the UE based on the configuration indication information, or receive data sent by the UE based on the configuration indication information.

In an embodiment, the capability information reported by a UE includes at least one of: feedback delay of the UE receiving data, data processing delay of the UE, and at least one of an indication of HARQ feedback and retransmission supported for configuration by the UE.

In an embodiment, the configuration indication information is carried in at least one of: radio resource control RRC message, media access control MAC control message, and physical layer indication message.

In an embodiment, the configuration indication information includes at least one of: identification information associated with HARQ process, number of available HARQ processes for uplink data transmission, number of available HARQ processes for downlink data transmission, HARQ feedback time of uplink data transmission, HARQ feedback time of downlink data transmission, HARQ retransmission time of uplink data transmission, and HARQ retransmission time of downlink data transmission.

Wherein, the identification information associated with HARQ process includes at least one of: a radio bearer identification, a MAC entity identification, a serving cell identification and a HARQ process identification.

In an embodiment, when the configuration indication information is carried in RRC connection reconfiguration message in the RRC message, the configuration indication information includes at least one of: number of available HARQ processes for uplink data transmission, number of available HARQ processes for downlink data transmission, HARQ feedback time of uplink data transmission, HARQ feedback time of downlink data transmission, HARQ retransmission time of uplink data transmission, and HARQ retransmission time of downlink data transmission.

In an embodiment, downlink data transmission is scheduled through PDCCH, the configuration indication information includes at least one of: the HARQ feedback time of downlink data transmission and the HARQ retransmission time of downlink data transmission.

In an embodiment, the first data transmission module 803 is configured to receive first feedback data sent by the UE in the HARQ feedback time of downlink data transmission indicated in the configuration indication information; or, send first retransmission data to the UE in the HARQ retransmission time of downlink data transmission indicated in the configuration indication information.

In an embodiment, the first data transmission module 803 is configured to send second feedback data to the UE in the HARQ feedback time of uplink data transmission indicated in the configuration indication information; or, receive second retransmission data sent by the UE in the HARQ retransmission time of uplink data transmission indicated in the configuration indication information.

The present embodiment provides a data transmission device 80, which can flexibly configure the time point of data transmission or feedback or retransmission of the HARQ according to the processing capability or the service type of the UE, thereby being able to adapt to more flexible network deployment and reduce the UE's Service transmission delay.

### Embodiment 5

Based on the same technical concept of the foregoing embodiment, referring to FIG. 9, a device 90 for data transmission provided by an embodiment of the present disclosure is shown, the data transmission device 90 can be used in UE, the data transmission device 90 can include a second receiving module 901, a second sending module 902 and a second data transmission module 903, wherein,
The second sending module 901 is configured to send its own capability information to a network side.

The second receiving module 902 is configured to receive configuration indication information sent by the network side; wherein, the configuration indication information is indicative of a time point for data transmission between the network side and the second data transmission 903.

The second data transmission 903 is configured to receive data sent by the network side based on the configuration indication information; or send data to the network side based on the configuration indication information.

In an embodiment, the capability information sent by the second sending module 901 includes at least one of: feedback delay of the UE receiving data, data processing delay of the UE, and at least one of an indication of HARQ feedback and retransmission supported for configuration by the UE.

In an embodiment, the configuration indication information includes at least one of: identification information associated with HARQ process, number of available HARQ processes for uplink data transmission, number of available HARQ processes for downlink data transmission, HARQ feedback time of uplink data transmission, HARQ feedback time of downlink data transmission, HARQ retransmission time of uplink data transmission, and HARQ retransmission time of downlink data transmission.

Wherein, the identification information associated with HARQ process includes at least one of: a radio bearer identification, a MAC entity identification, a serving cell identification and a HARQ process identification.

In an embodiment, the configuration indication information is carried in at least one of: radio resource control RRC message, media access control MAC control message, and physical layer indication message.

In an embodiment, the second data transmission module 903 is configured to, for the received downlink data, send first feedback data to the network side in HARQ feedback time of downlink data transmission indicated in the configuration indication information; or, receive first retransmission data sent by the network side in HARQ retransmission time of downlink data transmission indicated in the configuration indication information.

In an embodiment, the second data transmission module 903 is configured to receive second feedback data sent by the network side in HARQ feedback time of uplink data transmission indicated in the configuration indication information; or, send second retransmission data to the network side in the HARQ retransmission time of uplink data transmission indicated in the configuration indication information.

The present embodiment provides a data transmission device 90, HARQ data transmission, feedback or retransmission is performed according to a time point configured by the network side, and can adapt to more flexible network deployment and reduce service transmission delay of the UE.

### Embodiment 6

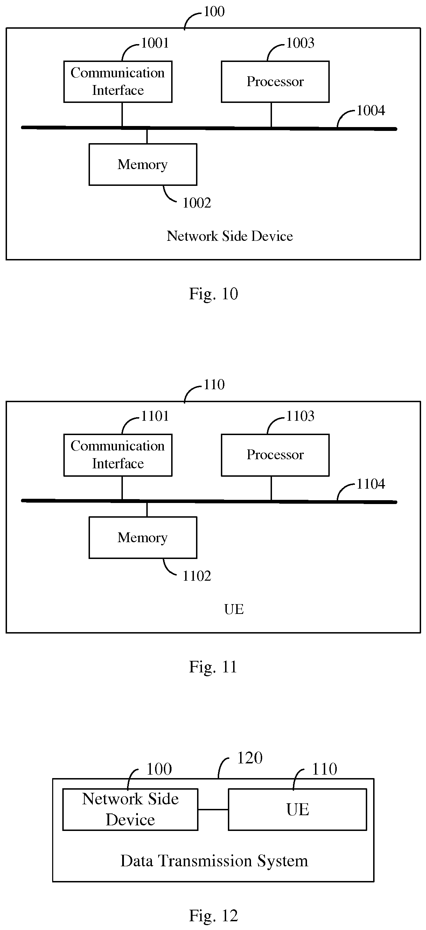

Based on the same technical concept of the foregoing embodiment, referring to FIG. 10, a network side device 100 provided by an embodiment of the present disclosure is shown, the network side device includes a communication interface 1001, a memory 1002, a processor 1003 and a bus 1004; wherein,
The bus 1004 is configured to connect the communication interface 1001, the processor 1003 and the memory 1002, and the communication between these devices.

The communication interface 1001 is configured to perform data transmission with an external network element

The memory 1002 is configured to store instructions and data.

The processor 1003 executing the instruction is indicative of the communication interface 1001 to receive capability information reported by a user equipment UE;
the communication interface 1001 is indicated to send, based on at least one of the capability information of the UE and service type of the UE acquired beforehand, configuration indication information to the UE; wherein the configuration indication information is indicative of a time point for data transmission between the network side and the UE.
the communication interface 1001 is indicated to send data to the UE based on the configuration indication information, or the communication interface 1001 is indicated to receive data sent by the UE based on the configuration indication information.

In practical applications, the memory 1002 may be a volatile memory, such as a Random-Access Memory 1002 (RAM); or a non-volatile memory, such as a Read-Only Memory (ROM), a flash memory, a Hard Disk Drive (HDD) or a Solid-State Drive (SSD); or a combination of the above types of memory, and provides instructions and data to the processor 1003.

The processor 1003 may be at least one of an Application Specific Integrated Circuit (ASIC), a Digital Signal Processor (DSP), a Digital Signal Processing Device (DSPD), or a Programmable Logic Device (PLD), a Programmable Logic Device, a Field Programmable Gate Array (FPGA), a Central Processing Unit (CPU), a controller, a microcontroller, and a microprocessor. It is to be understood that, for different devices, the electronic device for implementing the above-mentioned processor functions may be other, and the embodiment of the present disclosure is not specifically limited.

### Embodiment 7

Based on the same technical concept of the foregoing embodiment, referring to FIG. 11, a user equipment UE 110 provided by an embodiment of the present disclosure is shown, may include a communication interface 1101, a memory 1102, a processor 1103 and a bus 1104; wherein,

The bus 1104 is configured to connect the communication interface 1101, the processor 1103 and the memory 1102, and the communication between these devices.

The memory 1102 is configured to store instructions and data.

The processor 1103 executing the instruction is indicative of the communication interface 1101 to send its own capability information to a network side.

The communication interface 1101 is indicated to receive configuration indication information sent by the network side; wherein the configuration indication information is indicative of a time point for data transmission between the network side and a UE.

The communication interface 1101 is indicated to receive data sent by the network side based on the configuration indication information; or the communication interface 1101 is indicated to send data to the network side based on the configuration indication information.

In practical applications, the memory 1102 may be a volatile memory, such as a Random-Access Memory 1102 (RAM); or a non-volatile memory, such as a Read-Only Memory (ROM), a flash memory, a Hard Disk Drive (HDD) or a Solid-State Drive (SSD); or a combination of the above types of memory, and provides instructions and data to the processor 1103.

The processor 1103 may be at least one of an Application Specific Integrated Circuit (ASIC), a Digital Signal Processor (DSP), a Digital Signal Processing Device (DSPD), or a Programmable Logic Device (PLD), a Programmable Logic Device, a Field Programmable Gate Array (FPGA), a Central Processing Unit (CPU), a controller, a microcontroller, and a microprocessor. It is to be understood that, for different devices, the electronic device for implementing the above-mentioned processor functions may be other, and the embodiment of the present disclosure is not specifically limited.

### Embodiment 8

Based on the same technical concept of the foregoing embodiment, referring to FIG. 12, a system 120 for data transmission provided by an embodiment of the present disclosure is shown, wherein, the system includes a network side device 100 and a user equipment UE 110; wherein,
The network side device 100 is configured to receive capability information reported by the user equipment UE 110.

The configuration indication information is sent to the UE 110 based on at least one of the capability information of the UE 110 and service type of the UE 110 acquired beforehand; wherein the configuration indication information is indicative of a time point for data transmission between the network side 100 and the UE 110.

Data is sent to the UE 110 based on the configuration indication information, or data sent by the UE 110 is received based on the configuration indication information.

The UE 110 is configured to send its own capability information to the network side 100.

The configuration indication sent by the network side 100 is received.

The data sent by the network side 100 is received based on the configuration indication information; or the data is sent to the network side 100 based on the configuration indication information.

Those skilled in the art will appreciate that embodiments of the present disclosure can be provided as a method, system, or computer program product. Accordingly, the present disclosure may take the form of a hardware embodiment, a software embodiment, or a combination of software and hardware aspects. Moreover, the present disclosure may take the form of an implemented computer program product embodied on one or more computer-usable storage media (including but not limited to disk storage and optical storage, etc.) including computer usable program code.

The present disclosure is described with reference to flowchart illustrations and/or block diagrams of methods, apparatus (systems), and computer program products according to embodiments of the present disclosure. It will be understood that each flow and/or block of the flowchart illustrations and/or FIG. These computer program instructions can be provided to a processor of a general purpose computer, special purpose computer, embedded processor, or other programmable data processing device to produce a machine for the execution of instructions for execution by a processor of a computer or other programmable data processing device. Means for implementing the functions specified in one or more of the flow or in a block or blocks of the flow chart.

The present disclosure is described with reference to flowcharts and/or block diagrams of methods, apparatus (systems), and computer program products according to embodiments of the present disclosure. Each flow and/or block in the flowcharts and/or block diagrams, and the combination of flow and/or block in the flowchart and/or block diagram, shall be understood to be implemented by computer program instructions. These computer commands can be provided to a general-purpose computer, a specialized computer, an embedded processor, or the processor of other programmable data equipment so as to give rise to a machine with the result that the commands executed through the computer or processor of other programmable data equipment give rise to a device that is used to realize the functions designated by one or more processes in a flow chart and/or one or more blocks in a block diagram.

These computer program instructions may also be stored in a computer-readable memory that can direct a computer or other programmable data processing devices to function in a particular manner, such that the instructions stored in the computer-readable memory produce an article of manufacture including computer-readable instructions for implementing the one or multiple flows in the flowchart and/or the functions specified in one block or multiple blocks of the block diagram..

Such computer program commands can also be loaded on computers or other programmable data processing equipment so as to carry out a series of operation steps on computers or other programmable equipment to generate the process to be achieved by computers, so that the commands to be executed by computers or other programmable equipment achieve the one or multiple flows in the flowchart and/or the functions specified in one block or multiple blocks of the block diagram.

The above description is only for the preferred embodiments of the present disclosure, and is not intended to limit the scope of the disclosure.

### INDUSTRIAL APPLICABILITY

The embodiments of the present disclosure provide a method for data transmission, the time point of data transmission, feedback or retransmission of HARQ are flexibly configured according to different UE processing capabilities, network processing capabilities, network deployment, or service type of the UE, to adapt to more flexible network deployment and reduce the service transmission delay of the UE.

## Claims

1. A data transmission method, wherein, the method comprises:
receiving, by a network side, capability information reported by a user equipment UE;
sending, by the network side based on at least one of the capability information of the UE and pre-acquired service type of the UE , configuration indication information to the UE; wherein the configuration indication information is indicative of a time point for data transmission between the network side and the UE; and
sending, by the network side, data to the UE based on the configuration indication information, or receiving data sent by the UE based on the configuration indication information.

2. The method according to claim 1, wherein the capability information reported by the UE comprises at least one of:
feedback delay of the UE receiving data;
data processing delay of the UE; and
an indication of the UE supporting at least one of configurable HARQ feedback and retransmission.

3. The method according to claim 1, wherein, the configuration indication information is carried in at least one of:
a radio resource control RRC message;
a media access control MAC control message; and
a physical layer indication message.

4. The method according to claim 1, wherein the configuration indication information comprises at least one of:
identification information associated with a HARQ process;
number of available HARQ processes for uplink data transmission;
number of available HARQ processes for downlink data transmission;
HARQ feedback time of uplink data transmission;
HARQ feedback time of downlink data transmission;
HARQ retransmission time of uplink data transmission; and
HARQ retransmission time of downlink data transmission;
wherein, the identification information associated with a HARQ process comprises at least one of: a radio bearer identification, a MAC entity identification, a serving cell identification and a HARQ process identification.

5. The method according to claim 4, wherein, when the configuration indication information is carried in a RRC connection reconfiguration message in a RRC message, the configuration indication information comprises at least one of:
the number of available HARQ processes for uplink data transmission;
the number of available HARQ processes for downlink data transmission;
the HARQ feedback time of uplink data transmission;
the HARQ feedback time of downlink data transmission;
the HARQ retransmission time of uplink data transmission; and
the HARQ retransmission time of downlink data transmission.

6. The method according to claim 4, wherein, when the network side schedules downlink data transmission through PDCCH, the configuration indication information comprises at least one of:
the HARQ feedback time of downlink data transmission; and
the HARQ retransmission time of downlink data transmission.

7. The method according to claim 4, wherein, when the network side schedules uplink data transmission through PDCCH, the configuration indication information comprises at least one of:
the HARQ feedback time of uplink data transmission; and
the HARQ retransmission time of uplink data transmission.

8. The method according to claim 6, wherein, the sending, by the network side, data to the UE based on the configuration indication information comprises:
receiving, by the network side, first feedback data sent by the UE in the HARQ feedback time of downlink data transmission indicated in the configuration indication information;
the receiving data sent by the UE based on the configuration indication information comprises:
sending, by the network side, first retransmission data to the UE in the HARQ retransmission time of downlink data transmission indicated in the configuration indication information.

9. The method according to claim 7, wherein, the sending, by the network side, data to the UE based on the configuration indication information comprises:
sending, by the network side, second feedback data to the UE in the HARQ feedback time of uplink data transmission indicated in the configuration indication information;
the receiving data sent by the UE based on the configuration indication information comprises:
receiving, by the network side, second retransmission data sent by the UE in the HARQ retransmission time of uplink data transmission indicated in the configuration indication information.

10. A data transmission method, wherein, the method comprises:
sending, by a user equipment UE, capability information of the UE to a network side;
receiving, by the UE, configuration indication information sent by the network side; wherein, the configuration indication information is indicative of a time point for data transmission between the network side and the UE; and
receiving, by the UE, data sent by the network side based on the configuration indication information; or sending data to the network side based on the configuration indication information.

11. The method according to claim 10, wherein the capability information sent by the UE comprises at least one of:
feedback delay of the UE receiving data;
data processing delay of the UE; and
an indication of the UE supporting at least one of configurable HARQ feedback and retransmission.

12. The method according to claim 10, wherein the configuration indication information comprises at least one of:
identification information associated with a HARQ process;
number of available HARQ processes for uplink data transmission;
number of available HARQ processes for downlink data transmission;
HARQ feedback time of uplink data transmission;
HARQ feedback time of downlink data transmission;
HARQ retransmission time of uplink data transmission; and
HARQ retransmission time of downlink data transmission;
wherein, the identification information associated with a HARQ process comprises at least one of: a radio bearer identification, a MAC entity identification, a serving cell identification and a HARQ process identification.

13. The method according to claim 10, wherein, the configuration indication information is carried in at least one of:
a radio resource control RRC message;
a media access control MAC control message; and
a physical layer indication message.

14. The method according to claim 10, wherein, the receiving, by the UE, the capability information sent by the network side comprises:
for received downlink data, sending, by the UE, first feedback data to the network side in HARQ feedback time of downlink data transmission indicated in the configuration indication information;
the sending data to the network side based on the configuration indication information comprises:
receiving, by the UE, first retransmission data sent by the network side in HARQ retransmission time of downlink data transmission indicated in the configuration indication information.

15. The method according to claim 10, wherein, the receiving, by the UE, the capability information sent by the network side comprises:
receiving, by the UE, second feedback data sent by the network side in HARQ feedback time of uplink data transmission indicated in the configuration indication information;
the sending data to the network side based on the configuration indication information comprises:
sending, by the UE, second retransmission data to the network side in HARQ retransmission time of uplink data transmission indicated in the configuration indication information.

16. A data transmission device, wherein, the data transmission device comprises: a first receiving module, a first sending module and a first data transmission module, wherein,
the first receiving module is configured to receive capability information reported by a user equipment UE;
the first sending module is configured to send, based on at least one of the capability information of the UE and pre-acquired service type of the UE, configuration indication information to the UE; wherein the configuration indication information is indicative of a time point for data transmission between the network side and the UE; and
the first data transmission module is configured to send data to the UE based on the configuration indication information, or receive data sent by the UE based on the configuration indication information.

17. The device according to claim 16, wherein the capability information reported by the UE comprises at least one of:
feedback delay of the UE receiving data;
data processing delay of the UE; and
an indication of the UE supporting at least one of configurable HARQ feedback and retransmission.

18. A data transmission device, wherein, the device comprises a second sending module, a second receiving module and a second data transmission module, wherein,
the second sending module is configured to send capability information of the device to a network side;
the second receiving module is configured to receive configuration indication information sent by the network side; wherein, the configuration indication information is indicative of a time point for data transmission between the network side and the second data transmission module; and
the second data transmission module is configured to receive data sent by the network side based on the configuration indication information; or send data to the network side based on the configuration indication information.

19. The device according to claim 16, wherein the capability information sent by the second sending module comprises:
feedback delay of the UE receiving data;
data processing delay of the UE; and
an indication of the UE supporting at least one of configurable HARQ feedback and retransmission.

20. A network side device, wherein, the network side device comprises a communication interface, a memory, a processor and a bus; wherein,
the bus is configured to connect the communication interface, the processor, and the memory;
the communication interface is configured to perform data transmission with an external network element;
the memory is configured to store instructions and data; and
the processor executing the instructions is configured to:
indicate the communication interface to receive capability information reported by a user equipment UE;
indicate, based on at least one of the capability information of the UE and pre-acquired service type of the UE, the communication interface to send configuration indication information to the UE; wherein the configuration indication information is indicative of a time point for data transmission between the network side and the UE; and
indicate the communication interface to send data to the UE based on the configuration indication information, or indicate the communication interface to receive data sent by the UE based on the configuration indication information.

21. A user equipment UE, wherein the UE comprises a communication interface, a memory, a processor and a bus; wherein,
the bus is configured to connect the communication interface, the processor, and the memory;
the communication interface is configured to perform data transmission with an external network element;
the memory is configured to store instructions and data; and
the processor executing the instructions is configured to:
indicate the communication interface to send capability information of the UE to a network side;
indicate the communication interface to receive configuration indication information sent by the network side; wherein the configuration indication information is indicative of a time point for data transmission between the network side and a UE; and
indicate the communication interface to receive data sent by the network side based on the configuration indication information; or indicate the communication interface to send data to the network side based on the configuration indication information.

22. A data transmission system, wherein, the system comprises a network side device and a user equipment UE; wherein,
the network side device is configured to:
receive capability information reported by the UE;
send the configuration indication information to the UE based on at least one of the capability information of the UE and pre-acquired service type of the UE; wherein the configuration indication information is indicative of a time point for data transmission between the network side and the UE; and
send data to the UE based on the configuration indication information, or receive data sent by the UE based on the configuration indication information;
the UE is configured to:
send capability information of the UE to the network side;
receive configuration indication information sent by the network side; wherein, the configuration indication information is indicative of a time point for data transmission between the network side and the UE; and
receive data sent by the network side based on the configuration indication information; or send data to the network side based on the configuration indication information.

23. A storage medium, configured to store program code for performing the method of any one of claims 1 to 15.
